# EUROPÄISCHE PATENTANMELDUNG

(11) **EP 3 611 653 A1**
(43) Veröffentlichungstag der Anmeldung: **19.02.2020**
(21) Anmeldenummer: 18188693.8
(22) Anmeldetag: 13.08.2018
(51) Int. Cl.: G06K 9/00

(54) **VORRICHTUNG UND VERFAHREN ZUM ERFASSEN EINER BEREIFUNG EINES FAHRZEUGS**

(71) Anmelder: SICK AG, 79183 Waldkirch (DE)
(72) Erfinder: Seitel, Thomas, 6330 Cham (CH); Tarnoki, Andreas, 6060 Sarnen (CH)

(57) **Zusammenfassung**

Die Erfindung betrifft eine Vorrichtung und ein Verfahren zum Erfassen einer Bereifung eines Fahrzeugs zur Feststellung, ob an einer Achse eine Einfach- oder Zwillingsbereifung vorliegt. Dazu weist die Vorrichtung einen optischen Sensor auf, wobei der Sensor wenigstens einen Bereich einer Felge, auf der eine zu bestimmende Bereifung montiert ist, erfasst. Weiter ist eine Auswerteeinheit vorgesehen, die ausgebildet ist, aus den Sensorsignalen eine Form des Bereichs der Felge zu ermitteln und aus der Form ein Signal erzeugt, das die Art der Bereifung repräsentiert.

## Beschreibung

Die Erfindung betrifft eine Vorrichtung und ein Verfahren zum Erfassen einer Bereifung eines Fahrzeugs zur Feststellung, ob an einer Achse eine Einfach- oder Zwillingsbereifung vorliegt, mit einem optischen Sensor.

Eine Information über die Bereifung eines Fahrzeugs ist insbesondere in elektronischen Mautsystemen gewünscht, denn die Anzahl an Achsen und Art der Ausführung der Bereifung hat direkten Einfluss auf das zulässige Gesamtgewicht des Fahrzeugs und damit auf die Maut. Zur Erfassung des Fahrzeugs und seiner Achsen sind diverse Systeme verfügbar, welche das Fahrzeug und die Achsen über Induktionsschleifen, Piezosensorik oder optisch per Laserscanner oder Kamera detektieren.

Weiterhin ist es für solche Mautsysteme auch wichtig, ob es sich um eine Einfachbereifung oder Zwillingsbereifung handelt. Aktuell gibt es kein Produkt oder System am Markt, welches eine Doppelbereifung optisch erkennen kann. Eine gattungsgemäße Vorrichtung ist aus DE 42 01 523 A1 bekannt, bei der nach dem Lichtschnittverfahren die Lauffläche einer Bereifung mit einer Kamera erfasst wird und über die Verzerrung der Lichtlinie ein Höhenprofil und damit die Bereifung erfasst wird.

Eine solche Erfassung der Lauffläche ist aber im fließenden Verkehr sehr schwierig zu realisieren, da z.B. nur wenig Raum für eine freie Sicht auf die Lauffläche zur Verfügung steht und bei mehrspurigen Straßen mit Abschattungen von anderen Fahrzeugen zu rechnen ist.

Ausgehend von diesem Stand der Technik ist es Aufgabe der Erfindung, eine verbesserte Vorrichtung bereitzustellen, mit der zuverlässig eine Bereifung erfasst werden kann.

Vorrichtungsgemäß wird die Aufgabe gelöst, durch eine Vorrichtung mit den Merkmalen des Anspruchs 1.

Erfindungsgemäß umfasst die Vorrichtung zum Erfassen einer Bereifung eines Fahrzeugs zur Feststellung, ob an einer Achse eine Einfach- oder Zwillingsbereifung vorliegt, einen optischen Sensor, wobei der Sensor wenigstens einen Bereich einer Felge, auf der eine zu bestimmende Bereifung montiert ist, erfasst und weiter eine Auswerteeinheit vorgesehen ist, die ausgebildet ist, aus den Sensorsignalen eine Form des Bereichs der Felge zu ermitteln und in Abhängigkeit der Form ein Signal erzeugt, das die Art der Bereifung repräsentiert.

Die Erfindung beruht somit auf der wesentlichen Erkenntnis, dass Bereifung und Felgenform korrelieren und dass die Felgenform, oder besser die Form eines Bereichs der Felge, dann mittels eines optischen Sensors einfach von seitlich außen ermittelt werden kann und man über die erkannte Form dann auf die Bereifung rückschließen kann, also ob Einfach- oder Zwillingsbereifung vorliegt.

Dadurch ergeben sich die wesentlichen Vorteile, dass zur Erkennung der Bereifung keine gesonderten Sensoren (wie Schleifen oder Piezo) in die Straßenoberfläche verbaut werden müssen und eine freie Sicht des Sensors ohne Abschattungen auf die Felge erheblich einfacher zu realisieren ist, als eine Sicht auf die Lauffläche der Reifen.

Mit besonderem Vorteil können sogar bereits vorhandene Laserscanner in bekannten Fahrzeugklassifikationssystemen, wie sie heute in Mautsystemen eingesetzt werden, für die Erfindung eingesetzt werden. Es muss lediglich sichergestellt sein, dass der Laserscanner Sicht auf die Felgen hat. Auf diese Weise erfüllt der Laserscanner zwei Funktionen, nämlich zum einen die Fahrzeugerkennung (Profilerfassung) und zum anderen die Erkennung der Bereifung über die Erfassung der Felge.

Dazu ist es vorteilhaft, wenn eine Scanebene des Laserscanners nicht horizontal ausgerichtet ist, sondern eher vertikal.

In Weiterbildung der Erfindung kann auch die Auswerteeinheit beide Funktionen übernehmen, also neben der erfindungsgemäßen Bereifungserkennung auch eine Fahrzeugklassifikation.

Weiter könnte die Auswerteeinheit ausgebildet sein, darüber hinaus auch eine Anzahl Achsen für ein Fahrzeug zu bestimmen.

In einer erfindungsgemäßen Alternative kann der Sensor als 2D- oder 3D-Kamera ausgebildet sein. Im Falle einer 2D-Kamera wird über eine intelligente Bildauswertung aus dem zweidimensionalen Bild die Felgenform ermittelt. Eine solche Auswertung kann heutzutage sehr gut mit dem sogenannten Deep Learning Ansatz gelöst werden. Eine direktere Ermittlung der Felgenform kann mit einer 3D-Kamera möglich sein, aus deren Entfernungsdaten womöglich unmittelbar die Felgenform erkennbar ist. Es versteht sich, dass eine Sicht der Kamera auf die Felge ohne Abschattungen notwendig ist.

Verfahrensgemäß wird die Aufgabe gelöst durch ein Verfahren zum Erfassen einer Bereifung eines Fahrzeugs zur Feststellung, ob an einer Achse eine Einfach- oder Zwillingsbereifung vorliegt, mit den Schritten:
- Bereitstellen eines optischen Sensors,
- Erfassen wenigstens eines Bereichs einer Radnabe, auf der eine zu bestimmende Bereifung montiert ist, mit dem Sensor und Erzeugen entsprechender Sensordaten,
- Ermitteln einer Form des Bereichs der Radnabe aus den Sensordaten,
- Ermitteln der Bereifung aus der Form der Radnabe,
- Ausgeben eines Signals zur Kennzeichnung, ob eine Einfach- oder Doppelbereifung vorliegt.

Üblicherweise liegt bei sich bereichsweise nach außen wölbender Felge eine Einfachbereifung vor und bei sich bereichsweise nach innen wölbender Radnabe eine Zwillingsbereifung, so dass in vorteilhafterweise nur die grobe Form der Felge oder nur die Form der Felge in bestimmten radialen Bereiche erkannt werden muss, um ein der Bereifung entsprechendes Signal ausgeben zu können.

Im Folgenden wird die Erfindung anhand eines Ausführungsbeispiels unter Bezugnahme auf die Zeichnung im Einzelnen erläutert. In der Zeichnung zeigen:
- Fig. 1: eine erfindungsgemäße Vorrichtung mit Fahrzeug;
- Fig. 2: eine schematische Seitenansicht eines Fahrzeugs mit drei Achsen und Einfach- und Zwillingsbereifung;
- Fig. 3 bis 5: schematische Querschnittsansichten jeweils auf Höhe der Achsen des Fahrzeugs aus Fig. 2.

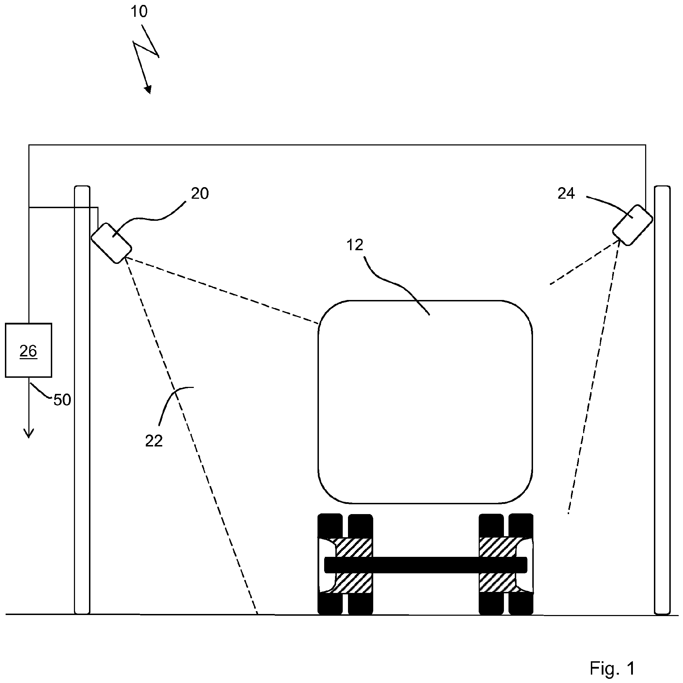

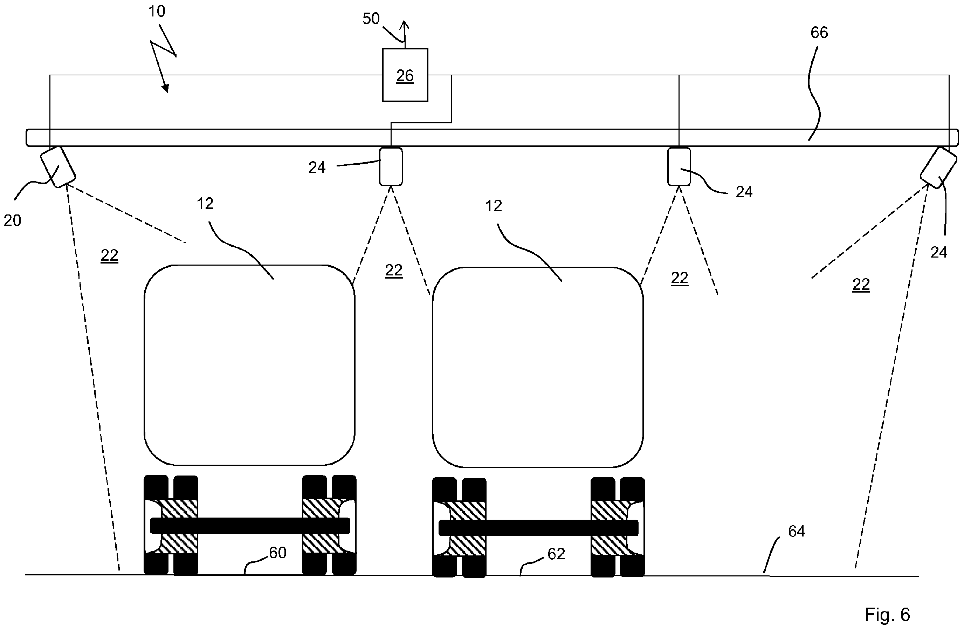

Eine erfindungsgemäße Vorrichtung 10 zum Erfassen einer Bereifung eines Fahrzeugs 12 zur Feststellung, ob an einer Achse eine Einfachbereifung oder eine Zwillingsbereifung vorliegt, umfasst einen optischen Sensor 20. Der Sensor 20 kann als Laserscanner oder bevorzugt als Kamera ausgebildet sein. Der Sensor 20 ist in der Ausbildung als Laserscanner an einem Fahrbahnrand derart montiert, dass seine Scanebene 22 im Wesentlichen vertikal verläuft und so ein vorbeifahrendes Fahrzeug 12 zumindest seitlich optisch erfasst. Der Laserscanner 20 nimmt zyklisch Entfernungsprofile auf, so dass während des Vorbeifahrens ein Profil des Fahrzeugs durch Zusammensetzen der einzelnen Scans erstellt werden kann. In der Ausbildung als Kamera nimmt der Sensor 20 Bilder des Fahrzeugs 12 in seinem Sichtbereich 22 auf. In der Regel wird eine Bildaufnahme durch einen anderen, nicht dargestellten Sensor, der die Anwesenheit des Fahrzeugs 12 erkannt, getriggert. Es sind auch Kombinationen von Laserscannern und Kameras denkbar, da an Messstationen, wie sie Fig. 1 und 6 zeigen, verschiedene Aufgabe erfüllt werden müssen. Zu diesen Aufgaben zählen, Fahrzeugklassifikation, Kennzeichenerkennung, Achszählung und dergleichen.

In der Ausführungsform nach Fig. 1 wird das Fahrzeug 12 mit einem weiteren Sensor 24 von der anderen Seite ebenfalls erfasst, so dass ein komplettes Profil des Fahrzeugs für eine Fahrzeugklassifizierung erstellt werden kann. Die Erfassung von zwei Seiten ist auch bei mehrspurigen Fahrbahnen wichtig (siehe Fig. 6), da bei mehr Fahrspuren häufig Fahrzeuge 12 nebeneinander fahren und in Seitenansicht das eine Fahrzeug das andere verdecken kann. Bei mehrspurigen Fahrbahnen ist es deshalb am Sinnvollsten, die Sensoren 20, 24 über der Fahrbahn und oberhalb der Fahrzeuge anzuordnen, so dass Fahrzeuge auf jeder Fahrspur möglichst von beiden Seiten erfassbar sind, wie dies in Fig. 6 angedeutet ist, in der eine Fahrbahn mit drei Fahrspuren 60, 62 und 64 dargestellt ist. Die Sensoren 20, 24 sind dort an einem Querträger 66 derart befestigt, dass ihr jeweiliges Sichtfeld 22 das Fahrzeug 12 auf einer Fahrspur von der Seite erfassen kann. Die Montageposition 24 muss dazu nicht zwingend mittig zwischen den Fahrpuren erfolgen, wie das in Fig. 6 beispielhaft angedeutet ist. Die Sensoren 24 zwischen den Fahrspuren 60, 62 und 64 aus Fig. 6 müssen auch nicht unbedingt zwei Fahrspuren gleichzeitig zugeordnet sein. Es können auch pro Fahrspur jeweils zwei Sensoren vorgesehen sein, für je eine Fahrzeugseite. Das ist alles eine Frage der am besten passenden Topologie und hängt von mehreren Parametern ab, z.B. auch von der Höhe des Querträgers, der Breite der Fahrspuren und damit dem Abstand benachbarter Fahrzeuge.

Weiter weist die erfindungsgemäße Vorrichtung 10 eine Auswerteeinheit 26 auf, die die Sensordaten, die von dem Sensor 20 bzw. von den Sensoren 20 und 24 geliefert werden, verarbeitet, um die vorgenannten Aufgaben zu erfüllen.

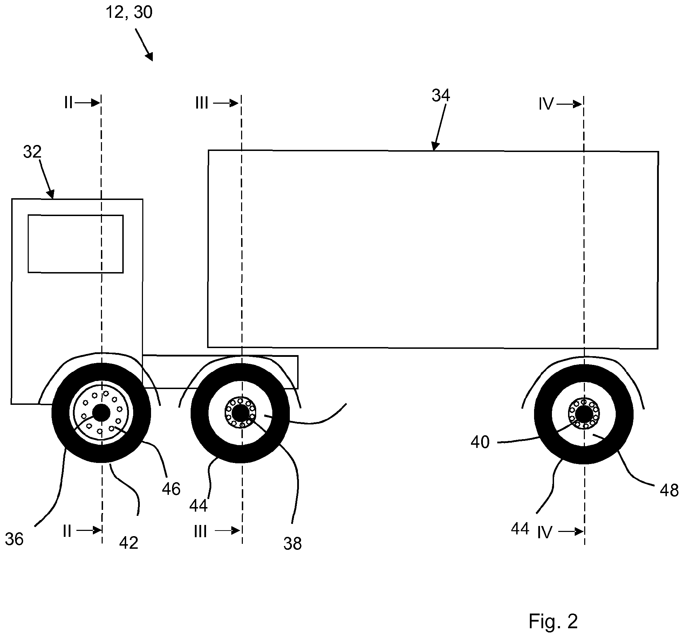

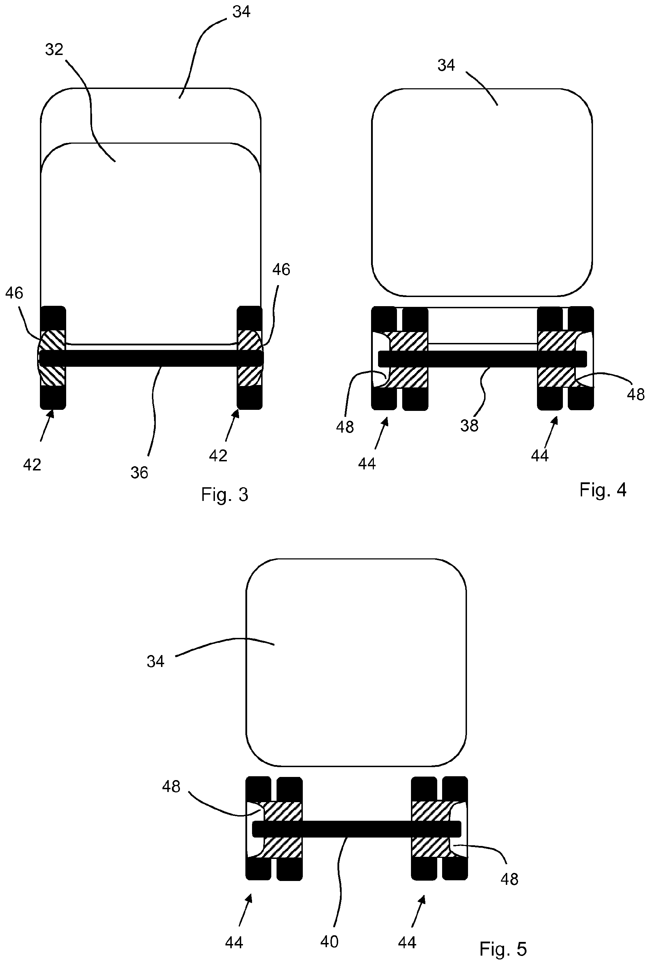

Der Kern der Erfindung, nämlich die Bereifungserkennung, soll anhand des in Fig. 2 in der Seitenansicht und Fig. 3 bis 5 im Querschnitt dargestellten Fahrzeugs 12 erläutert werden. Bei dem dargestellten Fahrzeug 12 handelt es sich um einen LKW 30 mit Zugmaschine 32 und Auflieger 34. Die Zugmaschine 32 hat zwei Achsen 36 und 38 und der Auflieger eine Achse 40. Die Räder 42 auf der ersten Achse 36 weisen eine Einfachbereifung auf, was in der Querschnittsdarstellung der Fig. 3 gezeigt sein soll. Die Räder 44 auf der zweiten Achse 38 und dritten Achse 40 weisen jeweils eine Zwillingsbereifung, was in den Querschnittsdarstellungen der Fig. 4 und 5 gezeigt sein soll. Je nach Bereifung hat die Felge eines Rades eine charakteristische Form. Die Felgen 46 der Räder 42 der ersten Achse sind zumindest bereichsweise nach außen gewölbt (Fig. 3) und die Felgen 48 der Räder 44 der beiden anderen Achsen 38 und 40 sind nach innen gewölbt (Fig. 4 und 5). Das sind die typischen Charakteristika für Einfach- und Zwillingsbereifung.

Im Sichtbereich 22 des Sensors 20 bzw. 24 befindet sich zu einem bestimmten Zeitpunkt wenigstens dieser genannte gewölbte Bereich einer Felge. Wenn der Sensor 20 als Laserscanner oder 3D-Kamera ausgebildet ist, nimmt er ein Entfernungsprofil der vorbeifahrenden LKW's 12 auf, das heißt er übermittelt seine Sensordaten an die Auswerteinheit 26, in der aus den einzelnen Entfernungsprofilen, das seitliche Profil inklusive der Form der Felgen 46 und 48 erstellt wird. Aus der Form der Felgen 46 und 48 kann die Auswerteeinheit 26, beispielsweise durch Vergleich mit bekannten Formen, auf die Art der Bereifung schließen. Wenn die Bereifung auf diese Art ermittelt ist, wird ein Signal erzeugt, das die Art der Bereifung repräsentiert und an einem Ausgang 50 bereitgestellt.

Wenn der Sensor 20 als 2D-Kamera ausgebildet ist, nimmt der Sensor ein Bild des Fahrzeugs 12 auf. Durch geeignete Bildverarbeitung, beispielsweise mit den Methoden des Deep Learning, kann das Bild dann im Hinblick auf die Form der Felge bzw. auf die Bereifung ausgewertet werden. Insofern ist mit der gewählten Formulierung in Anspruch 1, dass aus den Sensorsignalen eine Form des Bereichs der Felge 46, 48 ermittelt wird und in Abhängigkeit der ermittelten Form ein Signal, das die Art der Bereifung repräsentiert, erzeugt wird, auch eine solche Bildauswertung mit Deep Learning gemeint.

Wenn die Anzahl vorkommender Felgenformen begrenzt ist, könnten die Formen z.B. in einem Speicher in der Auswerteeinheit als Referenzen hinterlegt sein, so dass durch einen Vergleich von der gemessenen Felgenform mit den Referenzen, die genaue Felge bestimmt und so die Bereifung ermittelt werden. Das ist aber nur dann möglich, wenn die Felge ausreichend vermessen werden kann, was nur möglich ist, bei ausreichender Sicht auf die Felge. Wie oben beschrieben, genügt prinzipiell die Erkenntnis, ob die Felge in definierten Bereichen nach innen oder außen gewölbt ist.

Durch die Ermittlung des kompletten Fahrzeugprofils ist es möglich, dass durch die erfindungsgemäße Vorrichtung 10 mit der Auswerteeinheit 26 auch eine Fahrzeugklassifikation erfolgen kann. Selbstverständlich kann in gleicher Weise auch die Anzahl Achsen für ein Fahrzeug bestimmt werden.

## Patentansprüche

1. Vorrichtung zum Erfassen einer Bereifung eines Fahrzeugs (12) zur Feststellung, ob an einer Achse (36, 38, 40) eine Einfach- oder Zwillingsbereifung vorliegt, mit einem optischen Sensor (20, 24), **dadurch gekennzeichnet, dass** der Sensor (20, 24) wenigstens einen Bereich einer Felge (46, 48), auf der eine zu bestimmende Bereifung montiert ist, erfasst und dass eine Auswerteeinheit (26) vorgesehen ist, die ausgebildet ist, aus den Sensorsignalen eine Form des Bereichs der Felge (46, 48) zu ermitteln und in Abhängigkeit der ermittelten Form ein Signal erzeugt, das die Art der Bereifung repräsentiert.

2. Vorrichtung nach Anspruch 1, **dadurch gekennzeichnet, dass** der Sensor als entfernungsmessender Laserscanner ausgebildet ist.

3. Vorrichtung nach Anspruch 2, **dadurch gekennzeichnet, dass** eine Scanebene des Laserscanners nicht horizontal ausgerichtet ist.

4. Vorrichtung nach einem der vorhergehenden Ansprüche, **dadurch gekennzeichnet, dass** der Sensor nicht nur die Felge erfasst, sondern auch das Fahrzeug.

5. Vorrichtung nach einem der vorhergehenden Ansprüche, **dadurch gekennzeichnet, dass** die Auswerteeinheit ausgebildet ist, eine Fahrzeugklassifikation auszuführen.

6. Vorrichtung nach einem der vorhergehenden Ansprüche, **dadurch gekennzeichnet, dass** die Auswerteeinheit ausgebildet ist, eine Anzahl Achsen für ein Fahrzeug zu bestimmen.

7. Vorrichtung nach Anspruch 1, **dadurch gekennzeichnet, dass** der Sensor als 2D- oder 3D-Kamera ausgebildet ist.

8. Verfahren zum Erfassen einer Bereifung eines Fahrzeugs zur Feststellung, ob an einer Achse eine Einfach- oder Zwillingsbereifung vorliegt, mit den Schritten:
- Bereitstellen eines optischen Sensors,
- Erfassen wenigstens eines Bereichs einer Felge, auf der eine zu bestimmende Bereifung montiert ist, mit dem Sensor und Erzeugen entsprechender Sensordaten,
- Ermitteln einer Form des wenigstens einen Bereichs der Felge aus den Sensordaten,
- Ermitteln der Bereifung aus der Form des Bereichs der Felge,
- Ausgeben eines Signals zur Kennzeichnung, ob eine Einfach- oder Doppelbereifung vorliegt.

9. Verfahren nach Anspruch 8, **dadurch gekennzeichnet, dass** bei bereichsweise nach außen gewölbter Felge ein Signal für eine Einfachbereifung und bei bereichsweise nach innen gewölbter Felge ein Signal für eine Zwillingsbereifung ausgegeben wird.

10. Verfahren nach Anspruch 8, **dadurch gekennzeichnet, dass** das Ermitteln der Bereifung aus der Form des Bereichs der Felge durch Vergleich mit hinterlegten Referenz-Felgenformen erfolgt.
